(19) **Europäisches Patentamt**
**European Patent Office**
**Office européen des brevets**

(11) **EP 2 359 165 B1**

(12) **EUROPEAN PATENT SPECIFICATION**

(45) Date of publication and mention
of the grant of the patent:
**29.10.2014 Bulletin 2014/44**

(51) Int Cl.:
**G01V 5/10** (2006.01)

(21) Application number: **09756906.5**

(22) Date of filing: **17.11.2009**

(86) International application number:
**PCT/US2009/064812**

(87) International publication number:
**WO 2010/059634 (27.05.2010 Gazette 2010/21)**

(54) **SYSTEMS AND METHODS FOR NEUTRON POROSITY DETERMINATION WITH REDUCED LITHOLOGY ERROR**

SYSTEME UND VERFAHREN ZUR NEUTRONENPOROSITÄTSBESTIMMUNG MIT VERRINGERTEM LITHOLOGIEFEHLER

SYSTÈMES ET PROCÉDÉS POUR DÉTERMINER LA POROSITÉ AUX NEUTRONS AVEC UNE ERREUR À LITHOLOGIE RÉDUITE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **18.11.2008 US 115754 P**

(43) Date of publication of application:
**24.08.2011 Bulletin 2011/34**

(60) Divisional application:
**12156512.1 / 2 458 409**

(73) Proprietors:
• **Schlumberger Technology B.V.**
 **2514 JG The Hague (NL)**
 Designated Contracting States:
 **BG CZ DE DK GR HU IE IT LT NO PL RO SI SK TR**
• **PRAD Research and Development Limited**
 **Road Town, Tortola (VG)**
 Designated Contracting States:
 **AT BE CH CY EE ES FI HR IS LI LU LV MC MK MT PT SE SM**
• **Services Pétroliers Schlumberger**
 **75007 Paris (FR)**
 Designated Contracting States:
 **FR**
• **Schlumberger Holdings Limited**
 **Roadtown, Tortola (VG)**
 Designated Contracting States:
 **GB NL**

(72) Inventor: **THORNTON, James, L.**
 **East Windsor**
 **NJ 08520 (US)**

(74) Representative: **Hyden, Martin Douglas**
 **Finnegan Europe LLP**
 **16 Old Bailey**
 **London EC4M 7EG (GB)**

(56) References cited:
 **US-A- 4 631 405     US-A1- 2005 067 563**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

The present disclosure relates generally to neutron well logging and, more particularly, to techniques for reducing lithology error in neutron well logging.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Neutron well logging tools have been used to measure the porosity of oilfield subterranean formations for many years. Such devices generally include a neutron source and one or more neutron detectors. The neutron source may emit neutrons into the surrounding formation, which may be detected by the one or more neutron detectors in numbers that depend on the contents of the formation. In particular, the count of detected neutrons may be dominated by elastic scattering of the neutrons on hydrogen nuclei in the formation. Thus, all things being equal, when the formation includes more hydrogen, fewer neutrons may arrive at the one or more detectors.

As noted above, the porosity of the subterranean formation generally correlates with the quantity of hydrogen indicated by the neutron count, since the porosity of the formation may be typically filled with water or hydrocarbons. However, since some common downhole minerals contain bound water or hydroxyls, the neutron count may be more directly a measure of the hydrogen index. The hydrogen index represents a measure of the hydrogen content of the subterranean formation normalized to 100 for the amount of hydrogen in water at standard temperature and pressure. In addition to hydrogen index, however, the neutron count rate may also vary depending on, among other things, the concentration of elements in the formation besides hydrogen. Various techniques have been developed to attempt to minimize the lithology error due to these variations in formation composition by using epithermal detectors to avoid thermal neutron capture effects and by choosing a particular neutron detector spacing. However, these techniques may be inadequate for many formation compositions. In particular there may be no single optimal neutron detector spacing for minimizing the lithology effect on neutron porosity measurements.

US2005/067563 describes a well logging instrument including a plurality of detectors having different precisions and accuracies, the more precise detectors generally having lower accuracies. The detectors are responsive the interaction of an radiation from a suitable source on the instrument with earth formations. Outputs from the plurality of detectors are smoothed and combined to provide processed measurements with improved accuracy and precision.

SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

Embodiments of the present disclosure relate to systems, methods, and devices for determining the porosity of a subterranean formation with reduced lithology error. In one example, a downhole tool for such purposes includes a neutron source, a plurality of neutron detectors, and data processing circuitry. The neutron source is configured to emit neutrons into a subterranean formation, and the plurality of neutron detectors is configured to detect neutrons scattered from the subterranean formation.

The data processing circuitry is configured to determine a porosity of the subterranean formation based at least in part on a weighted combination of the detector responses from each of the at least two of the plurality of neutron detectors.

BRIEF DESCRIPTION OF THE DRAWINGS

Various aspects of this disclosure may be better understood upon reading the following detailed description and upon reference to the drawings in which:

FIG. 1 is a schematic diagram of a neutron well logging system, in accordance with present embodiments;

FIG. 2 is a schematic diagram of a neutron well logging operation using the system of FIG. 1, in accordance with an embodiment;

FIGS. 3-7 are plots illustrating lithology error due to various well conditions and neutron detector spacings, in accordance with embodiments;

FIGS. 8-10 are flowcharts describing embodiments of methods for determining an actual hydrogen index based on a weighted combination of neutron detector responses; and

FIGS. 11-13 are plots of lithology error when hydrogen index is calculated according to the techniques described herein at various neutron detector spacings.

## DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Present embodiments relate to downhole neutron well logging tools. Such tools includes a neutron source and three or more neutron detectors at different respective distances from the neutron source. After lowering the downhole tool into a subterranean formation, neutrons emitted into the formation by the neutron source may interact with the formation in various ways. Among other things, the neutrons may elastically scatter off hydrogen nuclei in the formation. Accordingly, each of the neutron detectors of the downhole tool may obtain a count of neutrons that varies based on the number of hydrogen nuclei in the formation, which may be measured as the hydrogen index of the formation. As noted above, the hydrogen index represents a measure of the hydrogen content of the subterranean formation normalized to 100 for the amount of hydrogen in water at standard temperature and pressure.

The neutron counts of the neutron detectors mentioned above may be determined with respect to the total number of neutrons emitted by the neutron source. If a radioisotopic neutron source like [241]AmBe is used for the neutron generation, its output can be determined through calibration in a known environment and the obtained calibration factor can be used to normalize the neutron counts. If the neutron source is an electronic neutron generator, such as a d-T generator, the neutron output may vary with time and/or operating conditions and a calibration may not be sufficient to obtain a normalization factor. In this case, the neutron output of the generator may be measured and the measurement used to derive the correct, time-varying normalization factor. In the following disclosure, neutron counts are assumed to be properly normalized through calibration or through the use of a monitor, measuring the instantaneous output of the neutron generator.

From these neutron counts, data processing circuitry may determine an apparent hydrogen index associated with each neutron detector. The apparent hydrogen index assumes "standard" well conditions (e.g., a calcite formation, fresh-water-filled porosity, 8 inch fresh-water-filled borehole, 20 °C, 1 atm, and so forth). When the subterranean environment differs from these standard well conditions, the neutron counts may differ, and the apparent hydrogen index based on the neutron counts may differ from the actual hydrogen index. This difference between the actual hydrogen index and the apparent hydrogen index in the case where the formation lithology differs from the assumed standard lithology may be referred to as "lithology error." Depending on the composition of the subterranean formation and the actual hydrogen index, the lithology error may be higher or lower when the neutron count is obtained at certain distances from the neutron source. That is, when the downhole tool includes neutron detectors at various distances from the neutron source, the apparent hydrogen indices derived from the counts of some neutron detectors may more accurately reflect the actual hydrogen index than those of other neutron detectors.

Embodiments of the present disclosure account for the lithology error present in the neutron detectors of the downhole tool in several manners. The embodiments may determine the actual hydrogen index based on the apparent hydrogen indices obtained by multiple neutron detectors at various distances. In certain cases, the apparent hydrogen index of one neutron detector may have a negative lithology error, the apparent hydrogen index of another neutron detector may have a positive lithology error, and the actual hydrogen index may lie somewhere between the two apparent hydrogen indices. In certain other cases, the apparent hydrogen index of two neutron detectors may both have positive lithology errors, one lithology error exceeding the other, and the actual hydrogen index may be extrapolated. The mathematical formulations given below account for both of the above cases and others.

To reduce lithology error, the actual hydrogen index may be computed using a suitably weighted combination of the apparent hydrogen indices obtained by each neutron detector. The weighting of each of the apparent hydrogen indices may be positive or negative and, in some embodiments, may be chosen to favor the apparent hydrogen index of the detector or detectors closer to the optimal spacing. In some embodiments, rather than simply depending on an "optimal" detector positioning, since the difference in apparent hydrogen index at the various spacings is itself a measure of the lithology error, the weighting of each of the apparent hydrogen indices may be considered a function of this difference. Among other things, such a function may include a polynomial. By way of example, such a polynomial may be chosen to be quadratic or cubic. Thus, as used herein, the terms "weight," "weighted," "weighting," and so forth, refer to the application of coefficients to apparent neutron detector values (e.g., apparent hydrogen index, count rates, ratios of count rates, etc.) to correct for lithology errors. These coefficients may be any numerical value, including any positive and/or negative value.

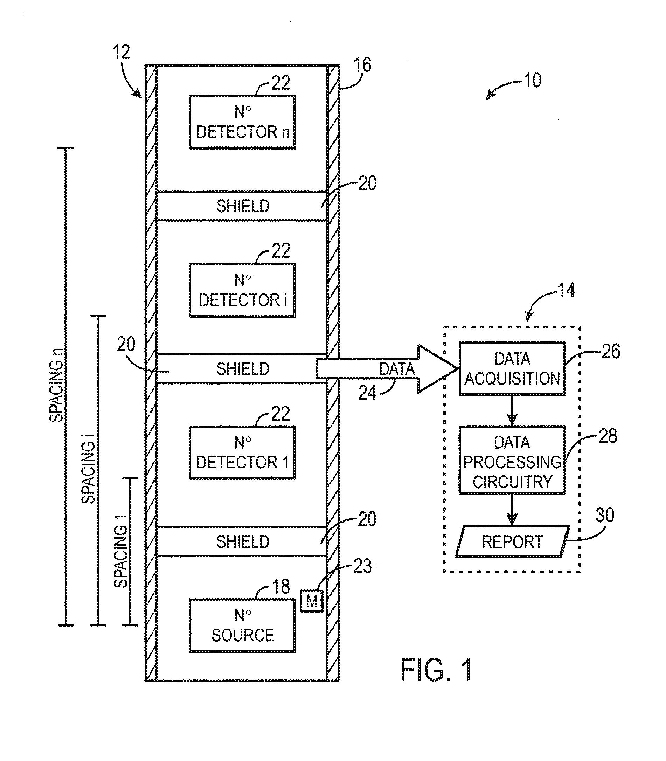

With the foregoing in mind, FIG. 1 illustrates a neutron well logging system 10 for determining a hydrogen index of a subterranean formation with reduced lithology error. As shown in FIG. 1, the neutron well logging system 10 may include a downhole tool 12 and a data processing system 14. The downhole tool 12 may be a slickline or wireline tool for logging an existing well, or may be installed in borehole assembly (BHA) for logging while drilling (LWD). The data processing system 14 may be a remote system or may be incorporated into the downhole tool 12.

The downhole tool 12 may include a housing 16 to house the various components of the downhole tool 12. Among other things, such a component of the downhole tool 12 may include a neutron source 18. By way of example, the neutron source 18 may be an electronic neutron source, such as a Minitron™ by Schlumberger Technology Corporation, which may produce pulses of neutrons through d-T reactions. Additionally or alternatively, the neutron source 18 may be a radioisotopic source such as AmBe or $^{252}$Cf. Neutron shields 20 may prevent neutrons from the neutron source 18 from contaminating the responses of various neutron detectors 22 of the downhole tool 12. In some embodiments, similar neutrons shields may also be placed between the neutron detectors 22 and the borehole-facing side of the downhole tool 12. This may reduce the number of neutrons that may reach the neutron detectors 22 via the borehole, versus those reaching the detector via the formation, thus increasing the sensitivity of the downhole tool 12 to formation properties versus those of the borehole.

As illustrated in FIG. 1, the downhole tool 12 may include any suitable number of neutron detectors 22, numbered from 1, to i, to n in FIG. 1. The neutron detectors 22 may be any neutron detectors able to detect thermal and/or epithermal neutrons, such as He3 neutron detectors. Although the presently disclosed techniques may most effectively reduce the lithology effect on the neutron detectors 22 when the neutron detectors 22 are epithermal neutron detectors, the presently disclosed techniques may also reduce the lithology effect on the neutron detectors 22 when the neutron detectors are thermal neutron detectors.

Each of the neutron detectors 22 may be separated from the neutron source 18 by a particular spacing measured from the neutron source 18 to the face nearest to the neutron source of the active region of the neutron detector 22, from a spacing 1, to a spacing i, to a spacing n. By way of example, suitable spacings may include 7 inches, 11 inches, 15 inches, 19 inches, and/or 23 inches from the neutron source 18. As should be appreciated, these spacings are intended to be exemplary and not exhaustive. As described in greater detail below, for a given lithology of a surrounding formation, a detector response from one of the neutron detectors 22 at a particular spacing may provide an apparent hydrogen index that more closely resembles the actual hydrogen index than the other neutron detectors 22 at other spacings. When the neutron source 18 includes an electronic neutron source, the downhole tool 12 may also include a neutron monitor 23. The neutron monitor 23 may measure the output of the neutron source 18 to provide a basis for normalizing the neutron counts detected by the neutron detectors 22. The neutron monitor 23 may be a plastic scintillation detector, sensitive only to high energy neutrons of energy levels emitted by the electronic neutron source 18, and may be located very close to the neutron source 18. In some embodiments, the neutron monitor 25 is not included, and the response of the downhole tool 12 may be based solely on ratios of count rates between the neutron detectors 22.

The responses of the neutron detectors 22 and/or the neutron monitor 23 may be provided to the data processing system 14 as data 24. The data processing system 14 may include a general-purpose computer, such as a personal computer, configured to run a variety of software, including software implementing all or part of the present techniques. Alternatively, the data processing system 14 may include, among other things, a mainframe computer, a distributed computing system, or an application-specific computer or workstation configured to implement all or part of the present technique based on specialized software and/or hardware provided as part of the system. Further, the data processing system 14 may include either a single processor or a plurality of processors to facilitate implementation of the presently disclosed functionality. For example, processing may take place at least in part by an embedded processor in the downhole tool 12.

In general, the data processing system 14 may include data acquisition circuitry 26 and data processing circuitry 28. The data processing circuitry 28 may be a microcontroller or microprocessor, such as a central processing unit (CPU), which may execute various routines and processing functions. For example, the data processing circuitry 28 may execute various operating system instructions as well as software routines configured to effect certain processes. These instructions and/or routines may be stored in or provided by a manufacture, which may include a computer readable-medium, such as a memory device (e.g., a random access memory (RAM) of a personal computer) or one or more mass storage devices (e.g., an internal or external hard drive, a solid-state storage device, CD-ROM, DVD, or other storage device). In addition, the data processing circuitry 28 may process data provided as inputs for various routines or software program, including the data 24.

Such data associated with the present techniques may be stored in, or provided by, a memory or mass storage device of the data processing system 14. Alternatively, such data may be provided to the data processing circuitry 28 of the data processing system 14 via one or more input devices. In one embodiment, data acquisition circuitry 26 may represent one such input device; however, the input devices may also include manual input devices, such as a keyboard, a mouse, or the like. In addition, the input devices may include a network device, such as a wired or wireless Ethernet card, a wireless network adapter, or any of various ports or devices configured to facilitate communication with other devices via any suitable communications network, such as a local area network or the Internet. Through such a network device, the data processing system 14 may exchange data and communicate with other networked electronic systems, whether proximate to or remote from the system. The network may include various components that facilitate communication, including switches, routers, servers or other computers, network adapters, communications cables, and so forth.

The downhole tool 12 may transmit the data 24 to the data acquisition circuitry 26 of the data processing system 14 via, for example, internal connections within the downhole tool 12, a telemetry system communication downlink or a communication cable. In some embodiments, the data acquisition circuitry 26 may be located within the downhole tool, and the data processing circuitry 28 may be downhole, uphole, or in an office. After receiving the data 24, the data acquisition circuitry 26 may transmit the data 24 to the data processing circuitry 28 via, for example, a telemetry system communication downlink or a communication cable. In accordance with one or more stored routines, the data processing circuitry 28 may process the data 24 to ascertain one or more properties of a subterranean formation surrounding the downhole tool 12, such as hydrogen index or porosity. Such processing may involve, for example, normalizing and/or calibrating the neutron counts, determining an apparent hydrogen index from the counts of each neutron detector 22, and weighting and summing the apparent hydrogen indices. The data processing circuitry 28 may thereafter output a report 30 indicating the one or more ascertained properties of the formation. The report 30 may be stored in memory or may be provided to an operator via one or more output devices, such as an electronic display and/or a printer.

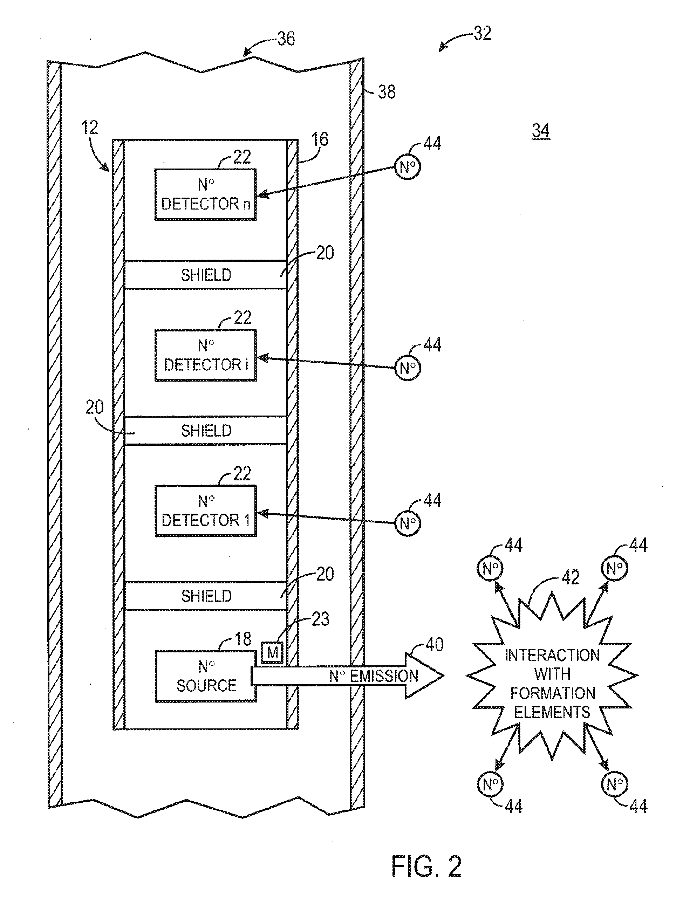

FIG. 2 represents a well logging operation 32 using the downhole tool 12 to ascertain a property of a subterranean formation 34, such as hydrogen index or porosity. As illustrated in FIG. 2, the downhole tool 12 may be lowered into a borehole 36 in the subterranean formation 34, which may or may not be cased in a casing 38. After placement into the subterranean formation 34, a neutron emission 40 from the neutron source 18 may have various interactions 42 with elements of the formation 34. By way of example, when the neutron source 18 includes an electronic neutron generator, the neutron emission 40 may be a neutron burst containing 14 MeV neutrons.

The interactions 42 of the neutron emission 40 with elements of the subterranean formation 34 may include, for example, inelastic scattering, elastic scattering, and neutron capture. The interactions 42 may result in neutrons 44 from the neutron emission 40 traveling through the subterranean formation 34 in varying numbers. Depending on the composition of the subterranean formation 34, the interactions 42 may vary, and the numbers of the neutrons 44 that reach the neutron detectors 22 at different distances from the neutron source 18 may also vary. As such, the different neutron detectors 22 may obtain correspondingly differing counts of the neutrons 44.

From the neutron counts obtained in the neutron well logging operation 32 of FIG. 2, the data processing system 14 may ascertain an apparent hydrogen index $\varphi_i$ for each neutron detector 22. However, because the subterranean formation 34 may not have "standard" well conditions (e.g., a calcite formation, fresh-water-filled porosity, 8 inch fresh-water-filled borehole, 20 °C, 1 atm, and so forth), the apparent hydrogen indices $\varphi_i$ may not correctly represent the actual hydrogen index of the subterranean formation 34. As noted above, the difference between the actual hydrogen index of the subterranean formation 34 and the apparent hydrogen index $\varphi_i$, as computed for a given neutron detector 22, may be referred to as lithology error as seen by that neutron detector 22.

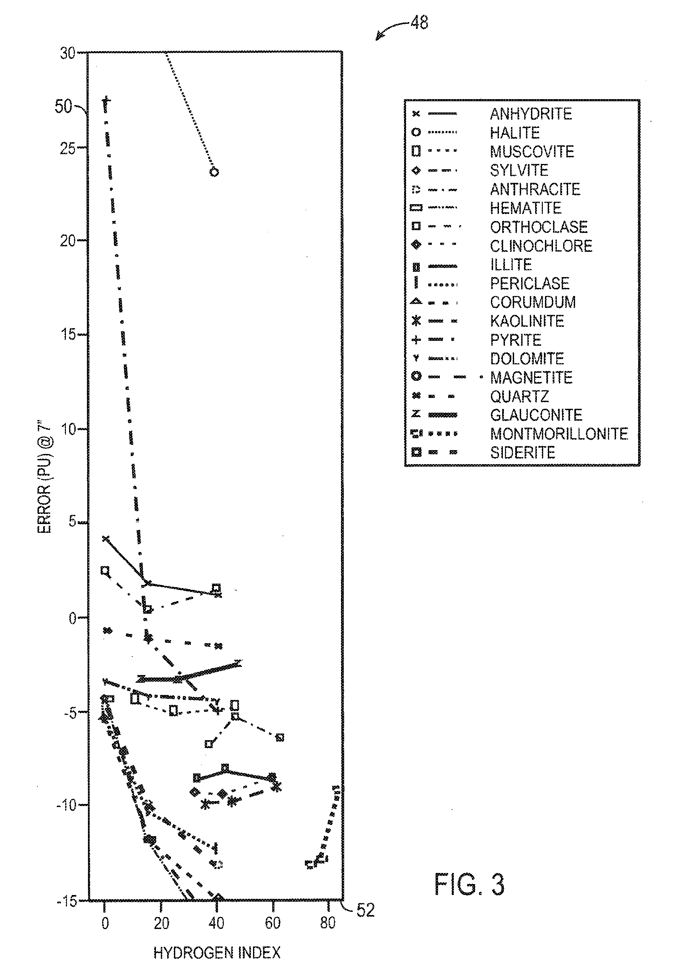

As mentioned above, different compositions of the subterranean formation 34 may result in different interactions 42, which may cause the neutron counts obtained by the neutron detectors 22 to differ from those obtained under standard well conditions. As a result, the apparent hydrogen indices obtained by the neutron detectors 22 at different spacings may vary from the actual hydrogen index with the composition of the subterranean formation. As illustrated in FIGS. 3-7, the lithology error may vary based on the neutron detector 22 spacing, the composition of the subterranean formation 34, and the actual hydrogen index of the subterranean formation 34.

FIGS 3-7 are plots that illustrate lithology error of a given epithermal $^3$He neutron detector 22 as a function of actual hydrogen index, when the subterranean formation 34 includes certain component minerals. It should be noted that the results illustrated by the plots of FIGS. 3-7 would likely be substantially different if a thermal, rather than epithermal, neutron detector 22 were instead modeled. In particular, FIGS. 3-7 respectively illustrate the lithology error of apparent hydrogen indices obtained from a neutron detector 22 spaced 7 inches, 11 inches, 15 inches, 19 inches, and 23 inches from the neutron source 18. Each of the plots of FIGS. 3-7 illustrate lithology error when a subterranean formation 34 includes anhydrite, anthracite, clinochlore, corumdum, dolomite, glauconite, halite, hematite, illite, kaolinite, magnetite, montmorillonite, muscovite, orthoclase, periclase, pyrite, quartz, siderite, and/or sylvite. The plots illustrated in FIGS. 3-7 have been modeled using the Monte Carlo N-Particle transport code, (MCNP), a leading nuclear Monte Carlo modeling code, when the downhole tool 12 employs a 14 MeV neutron source 18 and a single He3 epithermal neutron detector 22 spaced a particular distance from the neutron source 18. While these plots illustrate the lithology error of a single neutron detector at various spacings, the various embodiments for reducing lithology effect disclosed herein may also be employed for use with apparent porosities derived from count rate ratios (e.g., n2/n1 and n3/n1, etc.). It may be noted that the plots of FIGS. 3-7 may represent a worst-case scenario, since many of the minerals modeled are unlikely to appear in the subterranean formation in a pure form.

Turning first to FIG. 3, a plot 48 represents lithology error as a function of actual hydrogen index for a neutron detector 22 spaced 7 inches from the neutron source 18. In the plot 48, an ordinate 50 represents the lithology error of an apparent hydrogen index obtained from the neutron detector 22 in units of porosity units (p.u.). An abscissa 52 represents the actual hydrogen index. As shown in the plot 48, the lithology error of a neutron detector 22 spaced 7 inches from the neutron source 18 may be unacceptable over a wide range of actual hydrogen indices for a variety of subterranean formation 34 components.

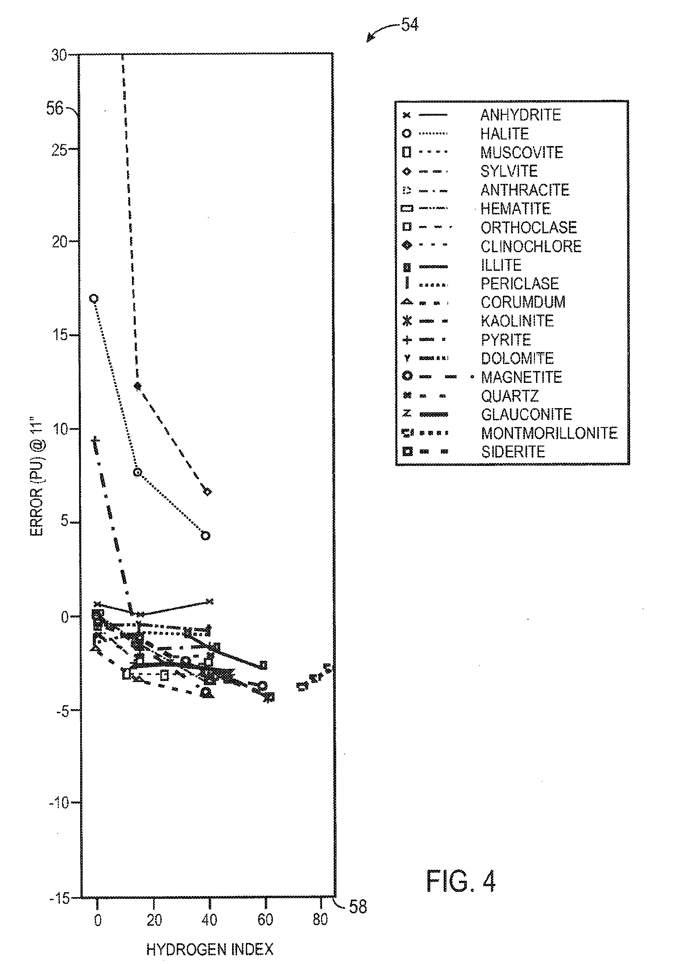

In FIG. 4, a plot 54 represents lithology error as a function of actual hydrogen index for a neutron detector 22 spaced 11 inches from the neutron source 18. In the plot 54, an ordinate 56 represents the lithology error of an apparent hydrogen index obtained from the neutron detector 22 in units of porosity units (p.u.). An abscissa 58 represents actual hydrogen index. As shown in the plot 54, for various compositions of the subterranean formation 34, the lithology error of a neutron detector 22 spaced 11 inches from the neutron source 18 may usually be modest, except for a few outlier minerals, e.g. sylvite and halite, whose lithology error decreases dramatically as the actual hydrogen index of the subterranean formation 34 increases, becoming smallest when the hydrogen index is relatively high (e.g., approximately 40 or greater).

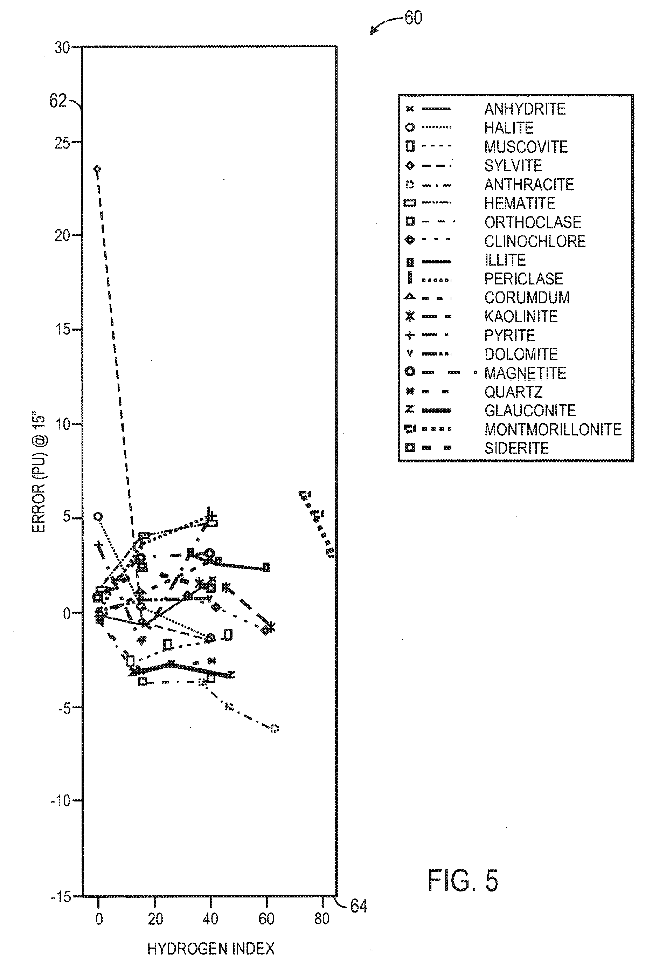

FIG. 5 illustrates a plot 60 representing lithology error as a function of actual hydrogen index for a neutron detector 22 spaced 15 inches from the neutron source 18. In the plot 60, an ordinate 62 represents the lithology error of an apparent hydrogen index obtained from the neutron detector 22 in units of porosity units (p.u.). An abscissa 64 represents actual hydrogen index. As shown in the plot 60, an apparent hydrogen index from a neutron detector 22 spaced 15 inches from the neutron source 18 may more accurately reflect the actual hydrogen index when the actual hydrogen index is low. As the actual hydrogen index increases, the lithology error may increase and the apparent hydrogen index may become less accurate.

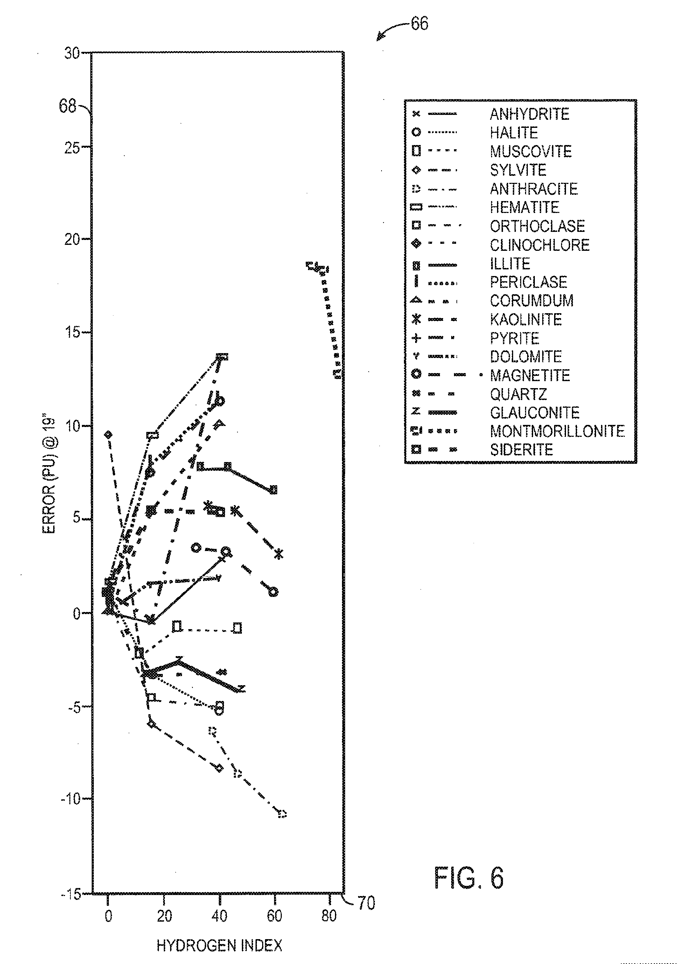

FIG. 6 illustrates a plot 66 representing lithology error as a function of actual hydrogen index for a neutron detector 22 spaced 19 inches from the neutron source 18. In the plot 66, an ordinate 68 represents the lithology error of an apparent hydrogen index obtained from the neutron detector 22 in units of porosity units (p.u.). An abscissa 70 represents actual hydrogen index. As shown in the plot 66, with few exceptions, when the actual hydrogen index is very low, the lithology error generally may be near zero. As the actual hydrogen index increases, the lithology error may increase significantly.

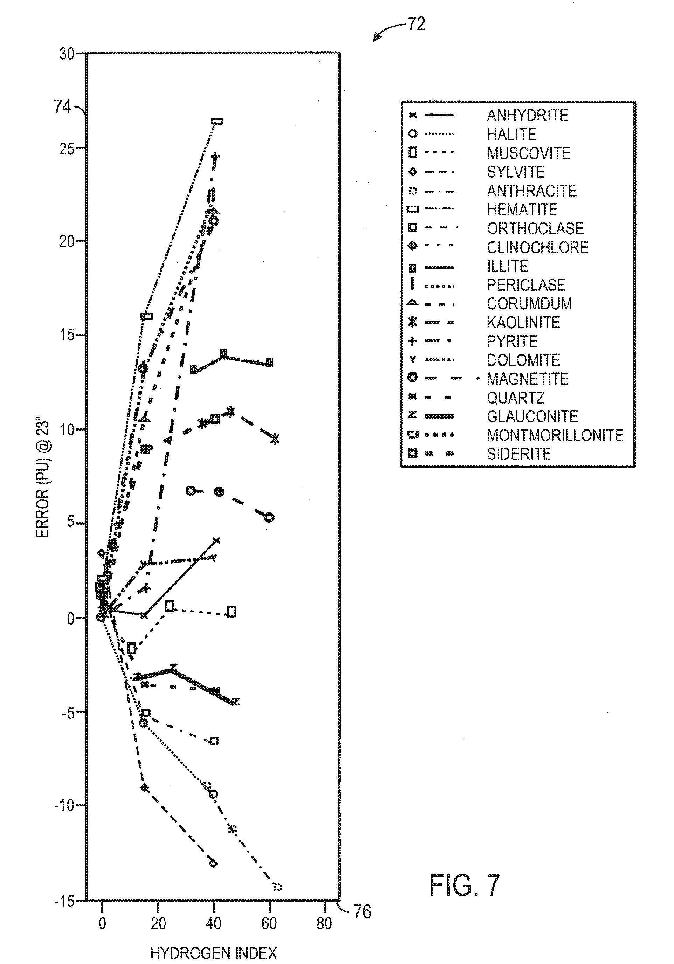

Finally, FIG. 7 illustrates a plot 72 representing lithology error as a function of actual hydrogen index for a neutron detector 22 spaced 23 inches from the neutron source 18. In the plot 72, an ordinate 74 represents the lithology error of an apparent hydrogen index obtained from the neutron detector 22 in units of porosity units (p.u.). An abscissa 76 represents actual hydrogen index. As apparent in the plot 72, regardless of the composition of the subterranean formation 34, very little lithology error is present when the actual hydrogen index is very low. However, when the hydrogen index is very high, the lithology error may become unacceptable.

As illustrated in FIGS. 3-7, the lithology errors when various minerals are present in the subterranean formation 34 may depend greatly on the spacing of the neutron detector 22. Notably, however, when the actual hydrogen index of the subterranean formation 34 is very low, a neutron detector 22 located relatively far from the neutron source 18 may provide the most accurate apparent hydrogen index regardless of the subterranean formation 34 composition. Similarly, when the actual hydrogen index is relatively high, a neutron detector spaced approximately 11 inches from the neutron source 18 may provide the most accurate apparent hydrogen index regardless of the subterranean formation 34 composition. When the actual hydrogen index is at an intermediate level, a neutron detector 22 at an intermediate spacing, such as 15 inches from the neutron source 18, may provide the most accurate measure of hydrogen index. However, the exact optimal spacing for a neutron detector 22 at a particular actual hydrogen index may depend on design considerations of the downhole tool, such as parameters of the neutron detectors 22, shield 20 placement, material choice along the neutron path, and neutron source energy (e.g., lowering the neutron source 18 energy may cause a neutron detector 22 spaced more closely to the neutron source 18 to be the optimal detector 22).

The neutron well logging system 10 may employ the relationships illustrated by FIGS. 3-7 and described above to determine a measure of hydrogen index with reduced lithology error. Rather than rely on a single apparent hydrogen index from a single neutron detector 22, or a simple average of several or all of the neutron detectors 22, the neutron well logging system 10 may determine hydrogen index using a weighted combination of two or more neutron detectors 22, In particular, a neutron detector 22 with a spacing expected to yield a more accurate apparent hydrogen index may be weighted more heavily than another neutron detector 22 with a spacing expected to yield a less accurate apparent hydrogen index, and these weighted values may be summed.

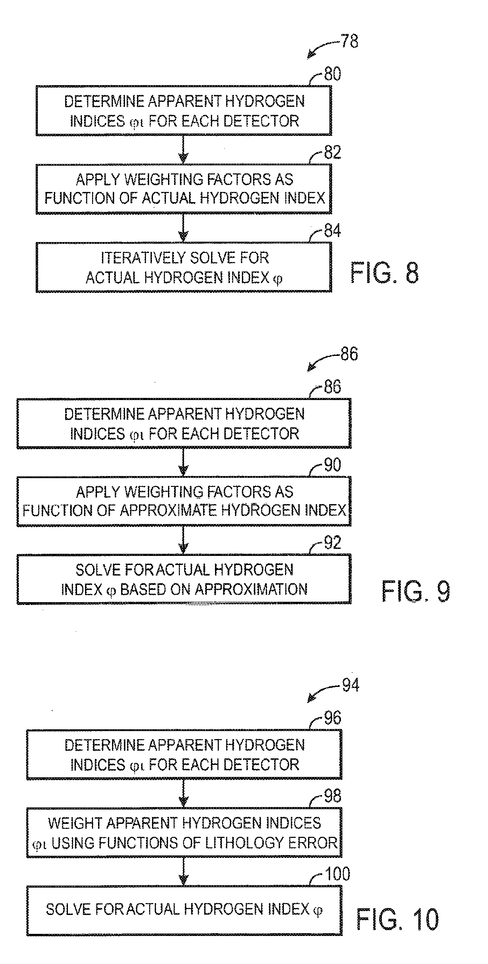

FIGS. 8-10 represent various embodiments of methods for determining the hydrogen index of the subterranean formation 34 based on the relationships illustrated in FIGS. 3-7 and described above. Turning first to FIG. 8, a flowchart 78 represents an embodiment of a method in which the hydrogen index of the subterranean formation may be weighted as a function of actual hydrogen index, and the actual hydrogen index may be solved for iteratively. In a first step 80, the downhole tool 12 may be lowered into the subterranean formation 34 and apparent hydrogen indices may be obtained from the neutron detectors 22 based on counts of neutrons 44 detected from the subterranean formation 34. As should be understood, in determining the apparent hydrogen index, certain environmental corrections, such as for borehole size, may be applied so that the formulas and their coefficients may be valid. Moreover, the neutron counts may be normalized to the output of the neutron source using the neutron monitor 23 and/or using ratios of neutron counts from the various neutron detectors 22 (e.g., n2/n1, n3/n1, etc.). Although the lithology of the subterranean formation 34 may be unknown, in step 82, the actual hydrogen index of the subterranean formation 34 may be defined according to the following relationships:

$$\varphi = \Sigma w_i\left(\varphi\right)\varphi_i \tag{1},$$

where $w_i$ represents weighting factors that may be chosen to favor the apparent hydrogen index $\varphi_i$ of the neutron detector 22 most optimal for the current (as yet unknown) actual hydrogen index $\varphi$.

By way of example, responses from two of the neutron detectors 22 of the downhole tool 12 may be used to determine the actual hydrogen index $\varphi$. The neutron detectors 22 may be respectively located 1 ft and 2 ft from the neutron source 18 (respectively referred to as the near neutron detector 22 and the far neutron detector 22). Under such conditions, the weighting factors should be chosen such that

$$w_{near} \approx 0 \ \& \ w_{far} \approx 1 \text{ at low } \varphi$$
$$w_{near} \approx 1 \ \& \ w_{far} \approx 0 \text{ at high } \varphi \tag{2}.$$

As such, when the actual hydrogen index is low (e.g., near to 0), the apparent index of the far neutron detector 22 is weighted most heavily because, regardless of the composition of the subterranean formation 34, the far neutron detector 22 will have the least lithology error. When the actual hydrogen index is high (e.g., 40 or greater), the apparent index of the near neutron detector 22 is weighted most heavily because, regardless of the composition of the subterranean formation 34, the near neutron detector 22 will have the least lithology error. When the actual hydrogen index is an intermediate value (e.g., between approximately 10 and 40), the value of the weighting factors may be selected between 0 and 1. As may be appreciated, however, the weighting factors described above depend upon the actual hydrogen index $\varphi$, which is not known a priori. As such, in step 84, the actual hydrogen index may be solved for iteratively in the data processing system 14 using any numerical method. By way of example, the data processing system 14 may use Newton's method to obtain an approximate value of actual hydrogen index in step 84.

FIG. 9 represents a flowchart 86 describing a similar embodiment of a method for determining actual hydrogen index based on a weighted combination of apparent hydrogen indices $\varphi_i$. In the flowchart 86, step 88 may take place in substantially the same manner as step 80 of the flow chart 78. Step 90 may differ from step 82, however, in that the weighting factors $w_i$ may be treated as a function of one or more of the apparent hydrogen indices obtained from the neutron detectors 22. By way of example, rather than representing a function of actual hydrogen index, the weighting factors $w_i$ may represent a function of the apparent hydrogen index of a neutron detector 22 nearest to or farthest from the neutron source 18, an apparent hydrogen index from an intermediate neutron detector 22, an average of the apparent hydrogen indices from some or all of the neutron detectors 22, and/or a weighted average of the apparent hydrogen indices from some or all of the neutron detectors 22. In step 92, the data processing system 14 may solve for the actual hydrogen index of the subterranean formation based on the approximation of step 90.

The techniques described above with reference to FIGS. 8 and 9 may be improved by noting that, instead of simply depending upon "optimal" neutron detector 22 positioning, the difference in the apparent hydrogen indices as determined by neutron detectors 22 at different spacings may represent a measure of a lithology error. Such a difference may be represented by the following:

$$\varphi_i - \varphi_j \,,$$

or, more simply, in the two detector case,

$$\varphi_{near} - \varphi_{far}\,,$$

which represents a measure of a lithology error and, therefore, an expected dependency.

FIG. 10 is a flowchart 94 representing an embodiment of a method for determining an actual hydrogen index $\varphi$ of the subterranean formation 34, based on the relationship noted above. In the flowchart 94, step 96 may take place in substantially the same manner as step 80 of FIG. 8. In step 98, the apparent hydrogen indices $\varphi_i$ may be weighted using functions of true hydrogen index and apparent hydrogen index differences, e.g. :

$$\varphi = \Sigma f_k \left( \varphi, \varphi_1 - \varphi_2, \ldots, \varphi_i - \varphi_j, \ldots \varphi_{n-1} - \varphi_n \right) \varphi_k \tag{3}.$$

More simply, when responses from only two neutron detectors 22 are used, and approximating the true actual hydrogen index $\varphi$ in the coefficients with the average of the apparent hydrogen indices, the following may be expected:

$$\varphi = f_{near} \left( \varphi_{near} + \varphi_{far}, \varphi_{near} - \varphi_{far} \right) \varphi_{near} + f_{far} \left( \varphi_{near} + \varphi_{far}, \varphi_{near} - \varphi_{far} \right) \varphi_{far} \tag{4}.$$

Although various functional forms may be chosen for the functions $f_i$, the simplest choice may be to approximate them as polynomials in the sum and differences of the apparent hydrogen indices $\varphi_i$ obtained by the neutron detectors 22 at different spacings. By way of example, in the case involving only two neutron detectors 22, the following relationship may be employed:

$$\varphi = \left( \Sigma\, a_{ij} \left( \varphi_{near} + \varphi_{far} \right)^i \left( \varphi_{near} - \varphi_{far} \right)^j \right) \varphi_{near} + \left( \Sigma\, b_{ij} \left( \varphi_{near} + \varphi_{far} \right)^i \left( \varphi_{near} - \varphi_{far} \right)^j \right) \varphi_{far} \tag{5},$$

or, equivalently:

$$\varphi = \Sigma\, c_{ij} \left( \varphi_{near} \right)^i \left( \varphi_{far} \right)^j \tag{6},$$

where the coefficients $c_{ij}$ may be derived during the characterization of the downhole tool 12 in various experimental and/or modeled settings. In certain embodiments, the coefficient $c_{00} = 0$, though this is not a necessary condition. Also, in some embodiments, in the case where $\varphi_{near} > \varphi_{far}$, a first set of coefficient $c_{ij}$ may be used and a different set of coefficient $d_{ij}$ may be used for the case where $\varphi_{near} < \varphi_{far}$. In some embodiments, the first set of coefficients $c_{ij}$ may include terms up to cubic and the second set of coefficients $d_{ij}$ may include terms only up to quadratic. In general, the coefficients $c_{ij}$ and/or $d_{ij}$ may be constrained to make the derived hydrogen index $\varphi$ continuous at $\varphi_{near} = \varphi_{far}$.

It should be further noted that, since the apparent hydrogen indices $\varphi_j$ are computed from the respective individual neutron detector 22 count rates, an alternative expression for improved multi-neutron-detector 22 hydrogen index could also be derived directly from these count rates. The optimal "weighting functions" or coefficients also may depend on the borehole 36 conditions (e.g., borehole size, borehole fluid composition, and so forth). These techniques may be extended to account for those other conditions, and may involve, for example, including terms in the polynomial expansion that depend on borehole size.

Following the step 98 of the flow chart 94, the data processing system 14 may solve for the actual hydrogen index $\varphi$ in step 100. While solving for the actual hydrogen index $\varphi$, if only two neutron detectors 22 are employed, Equation (6) may be used in step 98. Thus, in step 100, the prederived coefficients $c_{ij}$ may be used to compute the hydrogen index $\varphi$ from the apparent hydrogen indices using Equation (6).

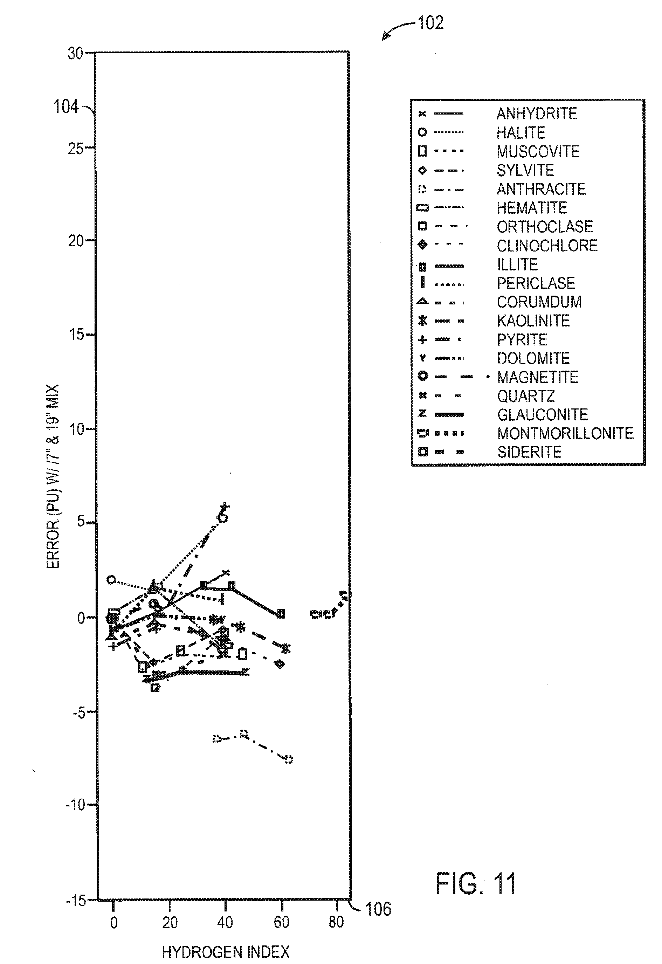

FIGS. 11-13 represent the result of such an expansion of Equation (6) for three different pairs of neutron detector 22 spacings. In each of the FIGS. 11-13, the coefficients $c_{ij}$ were chosen to minimize the remaining lithology error of the resultant computed hydrogen index. The individual apparent hydrogen indices are the same as those illustrated in FIGS. 3-7. It was found that a better fit could be obtained if one set of coefficients $c_{ij}$ was used for the case where $\varphi_{near} > \varphi_{far}$ and a different set of coefficients $d_{ij}$ was used for the case where $\varphi_{near} < \varphi_{far}$. In particular, for the $\varphi_{near} > \varphi_{far}$ case, terms up to cubic were used, as might be expected from Equation (6) above and the nonlinear hydrogen index dependence of the lithology error in some minerals as seen in FIGS. 3-7. In the $\varphi_{near} < \varphi_{far}$ case, terms up to quadratic were used.

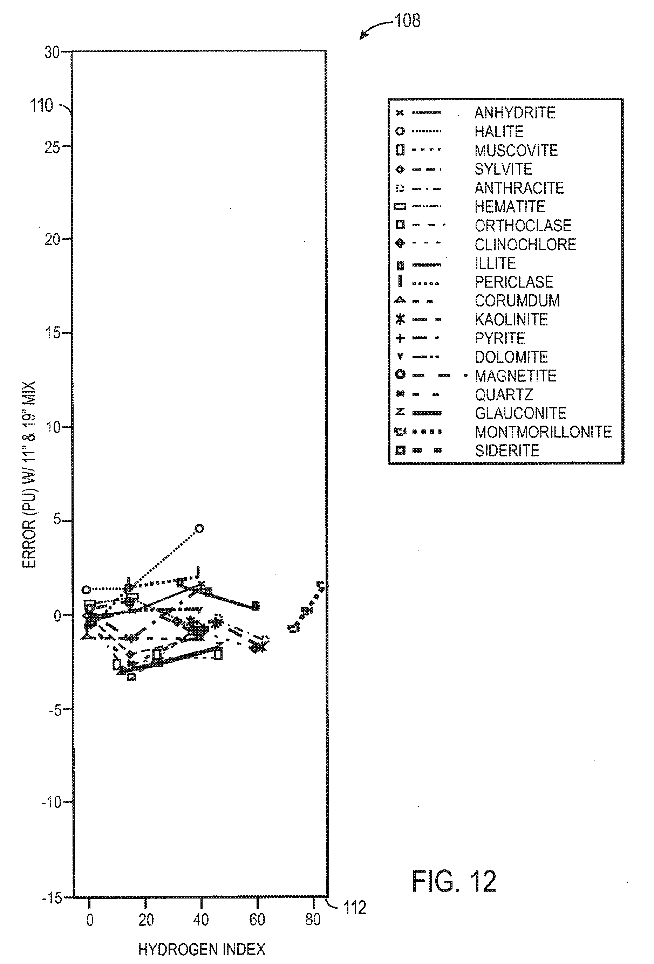

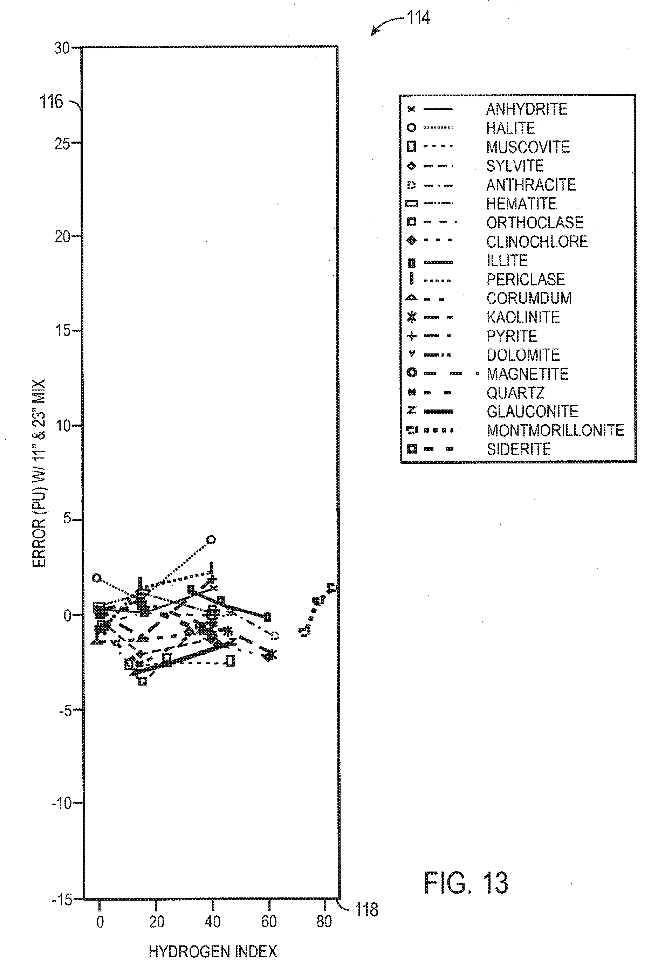

Turning to FIG. 11, a plot 102 represents lithology error as a function of actual hydrogen index for a neutron detector 22 pair respectively spaced 7 inches and 19 inches from the neutron source 18. In the plot 102, an ordinate 104 represents the resulting lithology error in units of porosity units (p.u.). An abscissa 106 represents the actual hydrogen index. Similarly, in FIG. 12, a plot 108 represents lithology error as a function of actual hydrogen index for a pair of neutron detectors 22 respectively spaced 11 inches and 19 inches from the neutron source 18. An ordinate 110 represents the lithology error in units of porosity units (p.u.). An abscissa 112 represents the actual hydrogen index. Finally, in FIG. 13, a plot 114 represents lithology error as a function of actual hydrogen index for a pair of neutron detectors 22 respectively spaced 11 inches and 23 inches from the neutron source 18. In the plot 114, an ordinate 116 represents lithology error in units of porosity units (p.u.). An abscissa 118 represents the actual hydrogen index.

As can be seen from a comparison of FIGS. 3-7 with FIGS. 11-13, using the presently disclosed techniques, the lithology error scatter has been reduced by an order of magnitude. Moreover, it may be understood that the plots of FIGS. 11-13 may represent a worst-case scenario, since many of the minerals depicted are unlikely to appear in the subterranean formation in a pure form. Also, in certain embodiments, the fit may be biased to reduce the lithology error that may occur when more common minerals are present in the subterranean formation 34, while accepting a larger lithology error for lithologies that are much less likely to occur.

## Claims

1. A well logging system (10) comprising:

   a downhole tool (12) comprising:

   a neutron source (18) configured to emit neutrons (40) into a subterranean formation (34);
   a plurality of neutron detectors (22) configured to detect neutrons (44) scattered from the subterranean formation (34) and to output detector responses, wherein the plurality of neutron detectors (22) are disposed at different respective distances from the neutron source (18); and

   data processing circuitry (28) configured to determine a porosity of the subterranean formation (34) based at least in part on a weighted combination of the detector responses from each of the plurality of neutron detectors (22);
   **characterized in that** the plurality of neutron detectors (22) comprises a plurality of neutron detectors including a first, second and third neutron detector, and wherein the data processing circuitry (28) is configured to:

   receive a plurality of neutron detector counts respectively obtained by the plurality of neutron detectors;
   determine a plurality of apparent porosities, wherein one of the plurality of apparent porosities is based at least in part on a ratio of a first of the plurality of neutron detector counts from the first neutron detector to a second of the plurality of neutron detector counts from the second neutron detector and wherein another of the plurality of apparent porosities is based at least in part on a ratio of a third of the plurality of neutron detector counts from the third neutron detector to the second of the plurality of neutron detector counts from the second neutron detector; and
   determine a porosity of the subterranean formation based at least in part on a weighted combination of apparent porosities, wherein the combination is weighted based at least in part on a function of one or more lithology errors associated with the plurality of neutron detectors, the one or more lithology errors being based at least in part on a difference between two of the plurality of apparent porosities.

2. The system of claim 1, wherein the neutron source(18) comprises a radioisotopic neutron source.

3. The system of claim 1, wherein the neutron source (18) comprises a 14 MeV neutron generator.

4. The system of claim 1, wherein a front face of an active region of the first neutron detector (22) is disposed between approximately 7 inches and 15 inches from the neutron source (18) and a front face of an active region of the second neutron detector (22) is disposed between approximately 15 inches and 27 inches from the neutron source (18).

5. The system of claim 1, wherein the plurality of neutron detectors (22) comprises at least one epithermal $^3$He neutron detector.

6. A method comprising:

receiving, into a processor, a plurality of neutron detector counts respectively obtained by a plurality of neutron detectors of a downhole tool in a subterranean formation, wherein the neutron detectors of the plurality of neutron detectors are disposed at different respective distances from a neutron source of the downhole tool; determining, using the processor, a plurality of apparent porosities, wherein one of the plurality of apparent porosities is based at least in part on a ratio of a first of the plurality of neutron detector counts from a first of the plurality of neutron detectors to a second of the plurality of neutron detector counts from a second of the plurality of neutron detectors and wherein another of the plurality of apparent porosities is based at least in part on a ratio of a third of the plurality of neutron detector counts from a third of the plurality of neutron detectors to the second of the plurality of neutron detector counts from the second of the plurality of neutron detectors; and determining, using the processor, a porosity of the subterranean formation based at least in part on a weighted combination of apparent porosities, wherein the combination is weighted based at least in part on a function of one or more lithology errors associated with the plurality of neutron detectors, the one or more lithology errors being based at least in part on a difference between two of the plurality of apparent porosities.

7. The method of claim 6, wherein the function comprises a polynomial.

**Patentansprüche**

1. Geschlossenes Neutronenbohrlochmesssystem (10), das Folgendes beinhaltet:

ein Bohrwerkzeug (12), das Folgendes beinhaltet:

eine Neutronenquelle (18), die konfiguriert ist, um Neutronen (40) in eine unterirdische Formation (34) auszusenden; eine Vielzahl von Neutronendetektoren (22), die konfiguriert sind, um Neutronen (44) zu detektieren, die von der unterirdischen Formation (34) gestreut werden, und Detektorreaktionen auszugeben, wobei die Vielzahl von Neutronendetektoren (22) in verschiedenen jeweiligen Abständen von der Neutronenquelle (18) angeordnet sind; und

Datenverarbeitungselektronik (28), die konfiguriert ist, um eine Porosität der unterirdischen Formation (34) mindestens zum Teil basierend auf einer gewichteten Kombination der Detektorreaktionen von jedem der Vielzahl von Neutronendetektoren (22) zu bestimmen; **dadurch gekennzeichnet, dass** die Vielzahl von Neutronendetektoren (22) eine Vielzahl von Neutronendetektoren beinhaltet, die einen ersten, zweiten und dritten Neutronendetektor einschließt, und wobei die Datenverarbeitungselektronik (28) konfiguriert ist, um:

eine Vielzahl von Neutronendetektorzählungen zu empfangen, die jeweils von der Vielzahl von Neutronendetektoren erhalten werden; eine Vielzahl von scheinbaren Porositäten zu bestimmen, wobei eine der Vielzahl von scheinbaren Porositäten mindestens zum Teil auf einem Verhältnis einer ersten der Vielzahl von Neutronendetektorzählungen vom ersten Neutronendetektor zu einer zweiten der Vielzahl von Neutronendetektorzählungen vom zweiten Neutronendetektor basiert und wobei eine andere der Vielzahl von scheinbaren Porositäten mindestens zum Teil auf einem Verhältnis einer dritten der Vielzahl von Neutronendetektorzählungen vom dritten Neutronendetektor zur zweiten der Vielzahl von Neutronendetektorzählungen vom zweiten Neutronendetektor basiert; und

eine Porosität der unterirdischen Formation mindestens zum Teil basierend auf einer gewichteten Kombination von scheinbaren Porositäten zu bestimmen, wobei die Kombination mindestens zum Teil basierend auf einer Funktion von einem oder mehreren Lithologiefehlern, verbunden mit der Vielzahl von Neutronendetektoren, gewichtet ist, wobei der eine oder mehrere Lithologiefehler mindestens zum Teil auf einer Differenz zwischen zwei der Vielzahl von scheinbaren Porositäten basiert.

2. System gemäß Anspruch 1, wobei die Neutronenquelle (18) eine radioisotopische Neutronenquelle beinhaltet.

3. System gemäß Anspruch 1, wobei die Neutronenquelle (18) einen 14-MeV-Neutronengenerator beinhaltet.

4. System gemäß Anspruch 1, wobei eine Vorderseite einer aktiven Region des ersten Neutronendetektors (22) zwischen ungefähr 7 Zoll und 15 Zoll von der Neutronenquelle (18) angeordnet ist und eine Vorderseite einer aktiven Region des zweiten Neutronendetektors (22) zwischen ungefähr 15 Zoll und 27 Zoll von der Neutronenquelle (18) angeordnet ist.

5. System gemäß Anspruch 1, wobei die Vielzahl von Neutronendetektoren (22) mindestens einen epithermischen $^3$He-Neutronendetektor beinhaltet.

6. Verfahren, das Folgendes beinhaltet:

Empfangen, in einem Prozessor, einer Vielzahl von Neutronendetektorzählungen, die jeweils von einer Vielzahl von Neutronendetektoren eines Bohrwerkzeugs in einer unterirdischen Formation erhalten werden, wobei die Neutronendetektoren der Vielzahl von Neutronendetektoren in verschiedenen jeweiligen Abständen von einer Neutronenquelle des Bohrwerkzeugs angeordnet sind;

Bestimmen, unter Verwendung des Prozessors, einer Vielzahl von scheinbaren Porositäten, wobei eine der Vielzahl von scheinbaren Porositäten mindestens zum Teil auf einem Verhältnis einer ersten der Vielzahl von Neutronendetektorzählungen von einem ersten der Vielzahl von Neutronendetektoren zu einer zweiten der Vielzahl von Neutronendetektorzählungen von einem zweiten der Vielzahl von Neutronendetektoren basiert und wobei eine andere der Vielzahl von scheinbaren Porositäten mindestens zum Teil auf einem Verhältnis einer dritten der Vielzahl von Neutronendetektorzählungen von einem dritten der Vielzahl von Neutronendetektoren zur zweiten der Vielzahl von Neutronendetektorzählungen von dem zweiten der Vielzahl von Neutronendetektoren basiert; und

Bestimmen, unter Verwendung des Prozessors, einer Porosität der unterirdischen Formation mindestens zum Teil basierend auf einer gewichteten Kombination von scheinbaren Porositäten, wobei die Kombination mindestens zum Teil basierend auf einer Funktion von einem oder mehreren Lithologiefehlern, verbunden mit der Vielzahl von Neutronendetektoren, gewichtet ist, wobei der eine oder mehrere Lithologiefehler mindestens zum Teil auf einer Differenz zwischen zwei der Vielzahl von scheinbaren Porositäten basiert.

7. Verfahren gemäß Anspruch 6, wobei die Funktion ein Polynom beinhaltet.

**Revendications**

1. Un système de diagraphie de puits (10) comprenant :

un outil de fond de puits (12) comprenant :

une source de neutrons (18) configurée de façon à émettre des neutrons (40) dans une formation souterraine (34),
une pluralité de détecteurs de neutrons (22) configurés de façon à détecter des neutrons (44) diffusés à partir de la formation souterraine (34) et à produire des réponses de détecteur, où la pluralité de détecteurs de neutrons (22) sont disposés à des distances différentes respectives de la source de neutrons (18), et
un circuit de traitement de données (28) configuré de façon à déterminer une porosité de la formation souterraine (34) en fonction au moins en partie d'une combinaison pondérée des réponses de détecteur provenant de chaque détecteur de la pluralité de détecteurs de neutrons (22),

**caractérisé en ce que** la pluralité de détecteurs de neutrons (22) comprend une pluralité de détecteurs de neutrons comprenant un premier, un deuxième et un troisième détecteur de neutrons, et où le circuit de traitement de données (28) est configuré de façon à :

recevoir une pluralité de décomptes de détecteur de neutrons respectivement obtenus par la pluralité de détecteurs de neutrons,

déterminer une pluralité de porosités apparentes, où une porosité de la pluralité de porosités apparentes est basée au moins en partie sur un rapport d'un premier décompte de la pluralité de décomptes de détecteur de neutrons provenant du premier détecteur de neutrons sur un deuxième décompte de la pluralité de décomptes de détecteur de neutrons provenant du deuxième détecteur de neutrons, et où une autre porosité de la pluralité de porosités apparentes est basée au moins en partie sur un rapport d'un troisième décompte de la pluralité de décomptes de détecteur de neutrons provenant du troisième détecteur de neutrons sur le deuxième décompte de la pluralité de décomptes de détecteur de neutrons provenant du deuxième détecteur de neutrons, et

déterminer une porosité de la formation souterraine en fonction au moins en partie d'une combinaison pondérée de porosités apparentes, où la combinaison est pondérée en fonction au moins en partie d'une fonction d'une ou de plusieurs erreurs de lithologie associées à la pluralité de détecteurs de neutrons, les une ou plusieurs erreurs de lithologie étant basées au moins en partie sur une différence entre deux porosités de la pluralité de porosités apparentes.

2. Le système selon la Revendication 1, où la source de neutrons (18) comprend une source de neutrons radio-isotopiques.

3. Le système selon la Revendication 1, où la source de neutrons (18) comprend un générateur de neutrons de 14 MeV.

4. Le système selon la Revendication 1, où une face avant d'une zone active du premier détecteur de neutrons (22) est disposée entre approximativement 7 pouces et 15 pouces de la source de neutrons (18) et une face avant d'une zone active du deuxième détecteur de neutrons (22) est disposée entre approximativement 15 pouces et 27 pouces de la source de neutrons (18).

5. Le système selon la Revendication 1, où la pluralité de détecteurs de neutrons (22) comprend au moins un détecteur de neutrons $^3$He épithermiques.

6. Un procédé comprenant :

la réception, dans un processeur, d'une pluralité de décomptes de détecteur de neutrons respectivement obtenus par une pluralité de détecteurs de neutrons d'un outil de fond de puits dans une formation souterraine, où les détecteurs de neutrons de la pluralité de détecteurs de neutrons sont disposés à des distances différentes respectives d'une source de neutrons de l'outil de fond de puits,

la détermination, au moyen du processeur, d'une pluralité de porosités apparentes, où une porosité de la pluralité de porosités apparentes est basée au moins en partie sur un rapport d'un premier décompte de la pluralité de décomptes de détecteur de neutrons provenant d'un premier détecteur de la pluralité de détecteurs de neutrons sur un deuxième décompte de la pluralité de décomptes de détecteur de neutrons provenant d'un deuxième détecteur de la pluralité de détecteurs de neutrons, et où une autre porosité de la pluralité de porosités apparentes est basée au moins en partie sur un rapport d'un troisième décompte de la pluralité de décomptes de détecteur de neutrons provenant d'un troisième détecteur de la pluralité de détecteurs de neutrons sur le deuxième décompte de la pluralité de décomptes de détecteur de neutrons provenant du deuxième détecteur de la pluralité de détecteurs de neutrons, et

la détermination, au moyen du processeur, d'une porosité de la formation souterraine en fonction au moins en partie d'une combinaison pondérée de porosités apparentes, où la combinaison est pondérée en fonction au moins en partie d'une fonction d'une ou de plusieurs erreurs de lithologie associées à la pluralité de détecteurs de neutrons, les une ou plusieurs erreurs de lithologie étant basées au moins en partie sur une différence entre deux porosités de la pluralité de porosités apparentes.

7. Le procédé selon la Revendication 6, où la fonction comprend un polynôme.

FIG. 1

**FIG. 2**

FIG. 3

FIG. 4

FIG. 5

FIG. 6

FIG. 7

```
                                                    ┌─78
                                                    ┌─80
        ┌──────────────────────────────────────┐
        │   DETERMINE APPARENT HYDROGEN          │
        │  INDICES φι FOR EACH DETECTOR          │
        └──────────────────────────────────────┘
                          │
                          ▼                  ┌─82
        ┌──────────────────────────────────────┐
        │   APPLY WEIGHTING FACTORS AS          │
        │ FUNCTION OF ACTUAL HYDROGEN INDEX     │
        └──────────────────────────────────────┘
                          │
                          ▼                  ┌─84
        ┌──────────────────────────────────────┐
        │      ITERATIVELY SOLVE FOR            │      FIG. 8
        │    ACTUAL HYDROGEN INDEX φ            │
        └──────────────────────────────────────┘
```

```
                                                    ┌─86
                                                    ┌─86
        ┌──────────────────────────────────────┐
        │   DETERMINE APPARENT HYDROGEN          │
        │  INDICES φι FOR EACH DETECTOR          │
        └──────────────────────────────────────┘
                          │
                          ▼                  ┌─90
        ┌──────────────────────────────────────┐
        │   APPLY WEIGHTING FACTORS AS          │
        │FUNCTION OF APPROXIMATE HYDROGEN INDEX │
        └──────────────────────────────────────┘
                          │
                          ▼                  ┌─92
        ┌──────────────────────────────────────┐
        │     SOLVE FOR ACTUAL HYDROGEN         │      FIG. 9
        │  INDEX φ BASED ON APPROXIMATION       │
        └──────────────────────────────────────┘
```

```
                                                    ┌─94
                                                    ┌─96
        ┌──────────────────────────────────────┐
        │   DETERMINE APPARENT HYDROGEN          │
        │  INDICES φι FOR EACH DETECTOR          │
        └──────────────────────────────────────┘
                          │
                          ▼                  ┌─98
        ┌──────────────────────────────────────┐
        │  WEIGHT APPARENT HYDROGEN INDICES     │
        │ φι USING FUNCTIONS OF LITHOLOGY ERROR │
        └──────────────────────────────────────┘
                          │
                          ▼                  ┌─100
        ┌──────────────────────────────────────┐
        │  SOLVE FOR ACTUAL HYDROGEN INDEX φ    │     FIG. 10
        └──────────────────────────────────────┘
```

FIG. 11

FIG. 12

FIG. 13

**EP 2 359 165 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005067563 A